# EUROPÄISCHE PATENTSCHRIFT

(11) **EP 1 494 901 B1**
(45) Veröffentlichungstag und Bekanntmachung des Hinweises auf die Patenterteilung: **05.03.2008**
(21) Anmeldenummer: 03718641.8
(22) Anmeldetag: 28.03.2003
(51) Int. Cl.: B60S 1/38, B60S 1/40

(54) **WISCHHEBEL MIT EINEM WISCHERARM UND EINEM AN DIESEM ANGELENKTEN WISCHBLATT ZUM REINIGEN VON SCHEIBEN INSBESONDERE VON KRAFTFAHRZEUGEN**
WIPER LEVER COMPRISING A WIPER ARM AND A WIPER BLADE WHICH IS CONNECTED TO THE SAME IN AN ARTICULATED MANNER, FOR CLEANING WINDOWS, ESPECIALLY WINDOWS PERTAINING TO MOTOR VEHICLES
LEVIER D'ESSUIE-GLACE MUNI D'UN BRAS D'ESSUIE-GLACE ET D'UN BALAI D'ESSUIE-GLACE ARTICULE DESSUS, POUR NETTOYER DES VITRES, EN PARTICULIER D'AUTOMOBILES

(30) Priorität: 04.04.2002 DE 10214956; 23.07.2002 DE 10233531; 08.08.2002 DE 10236385; 19.09.2002 DE 10243662; 12.12.2002 DE 10257990
(43) Veröffentlichungstag der Anmeldung: 12.01.2005
(73) Patentinhaber: ROBERT BOSCH GMBH, 70442 Stuttgart (DE)
(72) Erfinder: VERELST, Hubert, B-3300 Tienen (BE); WINDMOLDERS, Eric, B-3510 Kermt (BE); WILMS, Christian, B-3582 Beringen (Koersel) (BE); BEELEN, Hans, B-3540 Herk-de-Stad (BE); VERTONGEN, Robert, B-3800 Sinterueiten (BE)
(86) Internationale Anmeldenummer: PCT/DE2003/001031
(87) Internationale Veröffentlichungsnummer: WO 2003/084790

(56) Entgegenhaltungen:
- WO-A-02/40329
- DE-A- 3 709 810
- DE-A- 19 860 644

## Beschreibung

### Stand der Technik

Bei einem bekannten Wischhebel der im Oberbegriff des unabhängigen Anspruchs bezeichneten Art (PCT/DE 0104307) soll die Kappe, die zwischen Wischerarm und Wischblatt vorhandene Gelenkverbindung vor Umwelteinflüssen schützen und einen optisch ansprechenden Übergang vom Wischerarm zum Wischblatt bewirken. Weiter soll die Abdeckkappe, die sich im Übergangsbereich ergebenden Kanten und Spalten verdecken und damit der Entstehung von unerwünschten Fahrtwindgeräuschen entgegenwirken. Dabei soll aber die Leichtgängigkeit des Gelenks in keiner Weise beeinträchtigt werden. Über die Art und den Aufbau einer Verbindungsvorrichtung, insbesondere über dort möglicherweise vorhandenen Sicherungsmitteln und die Art deren Betätigung sind dort keine Hinweise zu finden. Auch bleibt offen, ob gegebenenfalls zu deren Bedienung beispielsweise zuerst die Kappe entfernt werden muss. Vorteile der Erfindung

Bei der erfindungsgemäßen Anordnung mit den kennzeichnenden Merkmalen des Anspruchs 1 nimmt die Abdeckkappe die am Wischhebel vorhandenen Sicherungsmittel samt deren Handhabe derart auf, dass diese betätigungsbereit zumindest innerhalb der Kontur der Kappe liegt. Weiter ist eine unbeabsichtigte Betätigung der aufgenommenen Sicherungsmittel über die so gesicherte Handhabe praktisch so lange ausgeschlossen, als sich der den Wischerarm und das Wischblatt umfassende Wischhebel in Betriebsstellung befindet.

In Weiterbildung der Erfindung ist an dem Kupplungselement des Wischblatts ein zur Gelenkverbindung gehörender, mit dem Kupplungsstück des Wischerarms verbindbare Adapter angelenkt, an dem die Handhabe für die Sicherungsmittel angeordnet ist, wobei die Ausgestaltung der Abdeckkappe die Betätigung der Sicherungsmittel zulässt. Durch diese Maßnahme werden zur Betätigung der Handhabe beziehungsweise der am Adapter befindlichen wischblattseitigen Sicherungsmittel keine besonderen Montageschritte, beispielsweise die Entfernung der Abdeckkappe zur Bedienung der Handhabe nötig.

Um eine selbsttätige Wirkung der Sicherungsmittel beim Anbringen des Wischblatts an den Wischerarm zu erreichen, besteht der Adapter aus einem elastischen Kunststoff, der mit gegen eine Rückstellkraft quer zur Längserstreckung des Tragelements in eine zu dessen Bandbreite zumindest nahezu parallelen Ebene auslenkbare, über die Handhabe betätigbare Sicherungsmittel bildende Rastmittel verfügt, die mit am Kupplungsstück des Wischerarms ausgebildeten Gegenrastmitteln zusammenwirken.

Zweckmäßig ist die Abdeckkappe trogartig ausgebildet und mit ihrem Trogrand dem Tragelement zugewandt. Sie ist mit einer Durchgreiföffnung für den Wischerarm versehen, wobei der Adapter mit der zur Troglängswand der Abdeckkappe vorspringenden Handhabe ausgestattet ist. Die vorspringende Handhabe ist als solche damit leicht erkennbar und auch einfach zu benutzen.

Bei einer bestimmten Ausführungsform der Gelenkverbindung ist es vorteilhaft, die der Handhabe benachbarte Trogwand der Abdeckkappe mit einer der Handhabe zugeordneten Ausnehmung zu versehen, welche die Bedienung der Sicherungsmittel über die Handhabe vereinfacht.

Eine weitere Verbesserung der Optik und der Bedienung der Sicherungsmittel wird erreicht, wenn die Handhabe in die Ausnehmung ragt und damit diese Ausnehmung weitgehend ausfüllt.

Eine geschlossene, optisch gefällige Ausführungsform der erfindungsgemäßen Anordnung wird erreicht, wenn die der Handhabe benachbarte Trogwand der Abdeckkappe an ihrer Innenseite mit einer nutartigen Vertiefung versehen ist, die sich von der Durchgreiföffnung zum Trogrand erstreckt und weiter die Handhabe in diese Vertiefung ragt.

Eine besonders vorteilhafte Ausführung der Erfindung ergibt sich dadurch, dass die der Handhabe benachbarte Trogwand der aus einem elastischen Kunststoff gefertigten Abdeckkappe einen der Handhabe zugeordneten, elastisch nachgiebigen Bereich aufweist. Die Bedienung der Handhabe beziehungsweise der Sicherungsmittel der Verbindungsvorrichtung ist dann auf einfache Weise durch Verformung des elastisch nachgiebigen Bereichs möglich.

Eine kostengünstige Ausgestaltung dieses elastisch nachgiebigen Bereichs wird gemäß einer vorteilhaften Weiterbildung der Erfindung dadurch erreicht, dass diese durch zumindest einen schlitzartigen, diesen Bereich teilweise umfassenden Durchbruch in der Trogwand gebildet ist.

Um die zum Betätigen der Sicherungsmittel notwendige elastische Verformung der Trogwand auf das dazu notwendige Maß zu begrenzen, hat es sich als zweckmäßig erwiesen, wenn der elastisch nachgiebige Bereich der Trogwand an seiner Innenseite mit einer sich zur Handhabe erstreckenden Abstützung versehen ist.

Eine besondere betriebssichere Ausführungsform der Sicherungsmittel wird dadurch erreicht, dass die Sicherungsmittel zwei in ihrer Auslenkrichtung mit Abstand von einander angeordnete Handhaben aufweisen, wobei in der einander angenäherten Auslenkposition der Handhaben die Sicherung der Verbindung zwischen Wischerarm und Wischblatt gelöst ist.

Zur Vereinfachung der Montage der Abdeckkappe am Tragelement des Wischblatts ist diese mit dem Tragelement verrastet.

In weiterer Ausgestaltung der Erfindung ist das Tragelement mit wenigstens zwei jeweils in einander entgegengesetzten Längsrichtungen weisenden Anschlägen versehen, denen entsprechende Gegenanschläge der Abdeckkappe zugeordnet sind. Dadurch ist die Montageposition der Abdeckkappe am Wischblatt beziehungsweise am Tragelement zwangsläufig festgelegt. Eine entsprechende Abstimmung der Anschläge und Gegenanschläge aufeinander legt die Position der Abdeckkappe am Wischblatt so fest, dass die Handhabe der Sicherungsmittel sich an der dafür vorgesehenen Stelle der Abdeckkappe befindet.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

In der Zeichnung zeigen:
Figur 1 die Seitenansicht eines Wischhebels gemäß der Erfindung,
Figur 2 eine in Figur 1 mit II bezeichnete, eine Vorrichtung zum Verbinden eines Wischblatts mit einem Wischerarm darstellende Einzelheit perspektivisch vergrößert und ohne Abdeckkappe gezeichnet,
Figur 3 die Anordnung gemäß Figur 2 in einer Explosionsdarstellung,
Figur 4 einen Schnitt entlang der Linie IV-IV in den Figuren 2 und 5, wobei der Schnitt durch das gesamte Wischblatt führt,
Figur 5 die in Figur 2 gezeigte, mit einer Abdeckkappe und einer Handhabe versehene Anordnung in einer ersten Betriebsstellung,
Figur 6 die Anordnung gemäß Figur 5 in ohne einer zweiten Betriebsstellung gezeichnet, Figur 7 die perspektivische Darstellung der zur Anordnung gemäß den Figuren 2 bis 6 gehörenden Abdeckkappe,
Figur 8 eine andere, mit einer Abdeckkappe versehene Verbindungsvorrichtung in einer ersten Betriebsstellung,
Figur 9 die Vorrichtung gemäß Figur 8 in einer zweiten Betriebsstellung,
Figur 10 die perspektivische Darstellung der zur Anordnung gemäß den Figuren 8 und 9 gehörenden Abdeckkappe,
Figur 11 eine andere Ausführungsform der Abdeckkappe gemäß Figur 10,
Figur 12 eine weitere, mit einer anderen Abdeckkappe versehene Verbindungsvorrichtung in Betriebsstellung des Wischhebels,
Figur 13 die Abdeckkappe gemäß Figur 12 in perspektivischer Darstellung von oben gesehen und
Figur 14 die Abdeckkappe gemäß den Figuren 12 und 13 perspektivisch dargestellt und von unten gesehen.

### Beschreibung der Ausführungsbeispiele

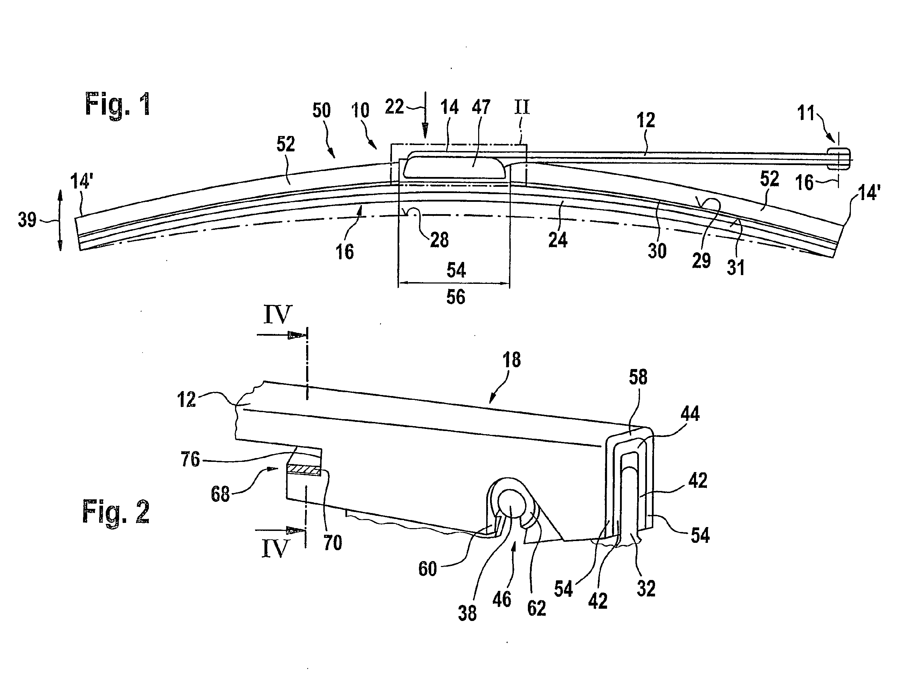

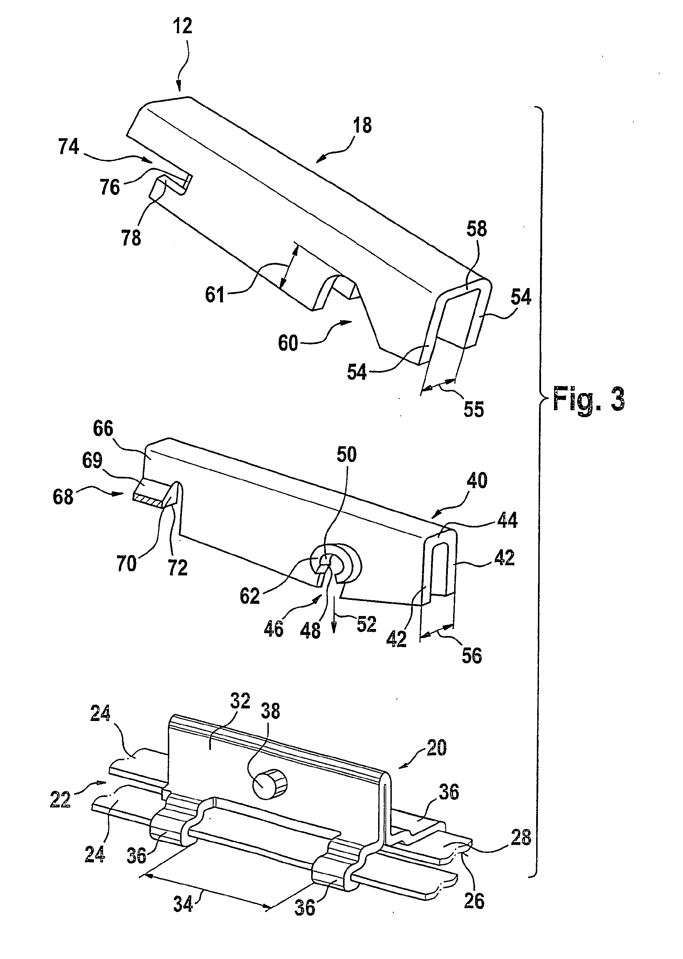

Zu einem in Figur 1 dargestellten Wischhebel 10 gehören ein Wischerarm 12 und ein an diesem angelenktes Wischblatt 14. Der Wischerarm 12 ist an seinem einen Ende um eine Achse 16 pendelnd angetrieben. Um die Gelenkverbindung zwischen Wischerarm und Wischblatt auf einfache Weise bewerkstelligen zu können, ist der Wischerarm mit einem Kupplungsstück 18 versehen (Figuren 2 und 3) an welches das Wischblatt 14 mit einem Kupplungselement 20 über einen Adapter angeschlossen werden kann. Das Kupplungselement 20 ist fest mit einem Tragelement 22 verbunden, das beim Ausführungsbeispiel zwei in einer gemeinsamen Ebene und mit Abstand von einander liegende Federschienen 24 aufweist. Das so gebildete bandförmig langgestreckte Tragelement 22 ist in seiner Längsrichtung über seine Bändflächen 26 und 28 gekrümmt. An seiner konkav gekrümmten Bandfläche 26 ist eine an zu wischenden Scheibe 15 anlegbare, gummielastische Wischleiste 30 angeordnet und an seiner anderen, konvex gekrümmten Bandfläche 28 sitzt das Kupplungselement 20 sowie ein die Wischarbeit des Wischblatts unterstützender Spoiler 23. Diese Anordnung ist in Figur 3 ohne Wischleiste und Spoiler dargestellt. Wie dort weiter zu sehen ist, hat das Kupplungselement 20 eine Längswand 32, welche über in Längsrichtung mit Abstand 34 von einander befindliche Haltekrallen 36 fest mit den Federschienen 24 des Tragelements 22 verbunden beispielsweise verschweißt sind. Aus der Längswand 32 des Kupplungselements 20 ragt beidseitig je ein quer zur Längsrichtung der Längswand ausgerichteter Gelenkzapfen 38, von denen in Figur 3 jedoch nur der eine, an der dem Betrachter zugewandten Seite angeordnete Gelenkzapfen sichtbar ist. Die Achsen der beiden Gelenkzapfen 38 fluchten miteinander. Weiter gehört zum Wischblatt noch der vorerwähnte Adapter 40 (Figur 3), der aus einem elastischen Kunststoff hergestellt ist. Der Adapter 40 hat einen im wesentlichen U-förmigen Querschnitt, dessen beide U-Schenkel 42 sich von der U-Basis 44 aus zum Tragelement 22 erstrecken. Der Abstand zwischen den beiden U-Schenkeln 42 ist so auf die Dicke der Längswand 32 abgestimmt, dass diese spielarm zwischen den beiden Schenkeln aufgenommen werden kann (Figur 2). Um dies zu ermöglichen, sind die beiden U-Schenkel mit zu ihren freien Enden hin randoffenen Aufnahmeschlitzen 46 versehen, die über je eine Engstelle 48 in Lageraufnahmen 50 für die Gelenkzapfen 38 übergehen (Figur 3). Dadurch ist es möglich, den Adapter 40 mit dem Kupplungselement 20 unverlierbar zu verrasten, weil die Engstelle 48 beim Aufrasten des Adapters 40 auf das Kupplungselement 20 in Richtung des Pfeiles 52 unter vorübergehender elastischer Aufweitung der Engstelle 48 die Gelenkzapfen in ihre Lageraufnahmen 50 gelangen lässt und damit ein Lösen des Adapters von den Gelenkzapfen 38 verhindert. Der Adapter 40 ist somit unverlierbar am Kupplungselement 20 beziehungsweise an dessen Gelenkzapfen 38 um die Längsachse der Gelenkzapfen 38 pendelbar gehalten. Mit Hilfe dieses, zum Wischblatt 14 gehörenden Adapters 40 kann das Wischblatt 14 nun auf einfache Weise mit dem Kupplungsstück 18 des Wischerarms 12 verbunden werden. Das Kupplungsstück 18 weist ebenfalls einen U-förmigen Querschnitt auf, der so dimensioniert ist, dass sich die als Führungswände für das Wischblatt dienende Seitenwände 54 in einem Abstand 55 voneinander befinden, der passend auf die Breite 56 des Adapters 40 abgestimmt ist. Die U-Basiswand 58 des Kupplungsstücks 18 bildet praktisch eine Abdeckung für die Gelenkverbindung (Figur 2). Um das Kupplungsstück 18 des Wischerarms 12 ordnungsgemäß mit dem Adapter 40 und damit mit dem Wischblatt 14 verbinden zu können, sind die U-Seitenwände 54 des Kupplungsstücks mit zu den freien Enden der Seitenwände 54 hin randoffenen Aussparungen 60 versehen. Die beiden Lageraufnahmen 50 in den U-Schenkeln 42 des Adapters 40 sind zur Verbesserung der Lagerfunktion und der Stabilität des Adapters mit kragenartigen Ansätzen 62 ausgestattet, welche sich von den U-Schenkeln 42 aus weg erstrecken und die Lageraufnahmen 50 inklusive der Engstellen 48 verbreitern. Die Aussparungen 60 dienen der Aufnahme der Ansätze 62, wenn der Wischhebel montiert wird. Die Abstimmung zwischen den kragenartigen Ansätzen 62 und der Tiefe 61 der Aussparungen 60 ist dabei so getroffen, dass ein möglichst geringes Spiel - in Richtung der Höhenerstreckung der Seitenwände 54 - möglich ist, wenn das Kupplungsstück 18 in der in Figur 2 dargestellten Position den Adapter 40 überdeckt. Im Bereich der Stirnfläche der Schenkel 42 oder im Bereich der Aussparung 60 sind bekannte, nicht dargestellte Sicherungsmittel angebracht, die den Wischerarm 12 auf dem Adapter 40 zusätzlich fixieren. Um die so erhaltene Gelenkverbindung zwischen Wischerarm 12 und Wischblatt 14 zu sichern, ist der Wischhebel 10 mit Sicherungsmitteln versehen, die beim Ausführungsbeispiel - bezogen auf die Achse der Gelenkzapfen 38 an der der Pendelachse 16 zugewandten Seite der Gelenkverbindung angeordnet sind. Die Sicherungsmittel umfassen wischblattseitig an zumindest einem der beiden U-Schenkel 42 des Adapters angeordnete Verlängerungen 66, an denen - frei hinter der Längswand 32 befindlich - jeweils ein Rastnocken 68 angeordnet ist. Jeder der Rastnocken 68 erstreckt sich von seiner Verlängerung 66 aus nach außen zur ihm benachbarten Seitenwand 54 des Kupplungsstück 18. Er ist jeweils mit einer dem Gelenkzapfen 38 zugewandten Rastschulter 70 versehen. Weiter hat jede Verlängerung 66 beziehungsweise jeder Rastnocken 68 noch eine Sicherungsschulter 72, die von der U-Basis 44 des Adapters 40 weg weist (Figur 3). Die Ausgestaltung der Verlängerungen 66 ist so getroffen, dass diese - als Fortsetzung der U-Schenkel 42 über die Längswand 32 hinausragend - mit Abstand voneinander liegen und auf einander zu gegen eine Rückstellkraft, elastisch auslenkbar sind. Diesen wischblattseitigen Sicherungsmitteln sind wischerarmseitige Sicherungsmittel zugeordnet. Diese sind an dem Kupplungsstück 18 des Wischerarms 12 ausgebildet. Wie insbesondere Figur 3 zeigt, sind an den beiden, der Pendelachse 16 zugewandten Endbereichen der Seitenwände 54 jeweils eine Rastaussparung 74 vorgesehen, an welcher eine mit der Rastschulter 70 zusammenarbeitende Gegenrastschulter 76 und eine mit der Sicherungsschulter 72 zusammenarbeitende Gegensicherungsschulter 78 ausgebildet ist (Figuren 2 und 3).

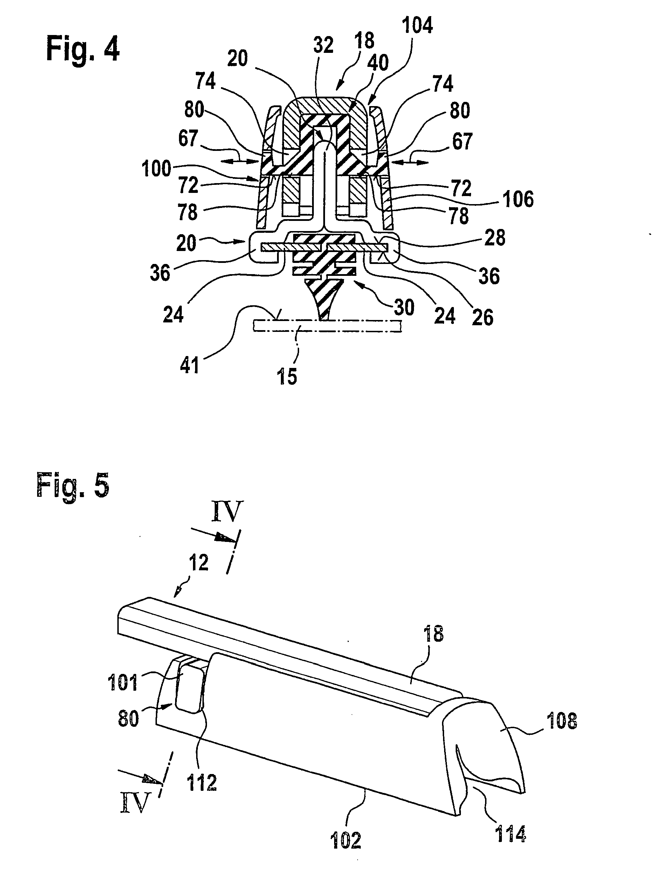

Zur gelenkigen Verbindung des Wischblatts 14 mit dem Wischerarm 12 wird zunächst der Adapter 40 in Aufrastrichtung (Pfeil 52 Figur 3) mit dem Kupplungselement 20 gelenkig verbunden. Damit ist praktisch die Fertigmontage des Wischblatts 14 erreicht. Die Abstimmung zwischen dem Kupplungselement 20 und dem Adapter 40 ist dabei so getroffen, dass der Adapter um ein bestimmtes Maß um die Längsachse der beiden Gelenkzapfen 38 pendeln kann. Danach erfolgt die Verbindung des Wischblatts mit dem Kupplungsstück 18 des Wischerarms 12. Dazu wird das Wischblatt mit seinem Adapter 40 so zwischen die beiden Seitenwände 54 des Kupplungsstück 18 eingeführt, dass die kragenartigen Ansätze 62 der Lageraufnahmen 50 in die an die Kontur dieser Ansätze angepassten Aussparungen 60 gelangen. Gleichzeitig stoßen die Rastnocken 68 mit an ihnen ausgebildeten Anlaufschrägen 69 an den freien Enden der Seitenwände 54 des Kupplungsstücks 18 an, so dass sie gegen eine Rückstellkraft in der einen Richtung der Doppelpfeile 67 aufeinander zu ausgelenkt werden, bis sie in die Rastaussparungen 74 in den Seitenwänden 54 gelangen und dort unter dem Einfluss der Rückstellkraft ihre Ausgangspositionen zurückfedern. In dieser dann erreichten, in den Figuren 2 und 4 dargestellten Montageposition, arbeiten die Rastschultern 70 mit den Gegenrastschultern 76 und die Sicherungsschultern 72 mit den Gegensicherungsschultern 78 derart zusammen, dass ein unbeabsichtigtes Lösen des Wischblatts vom Wischerarm ausgeschlossen ist. Um die Montage des Wischblatts am Wischerarm zu erleichtern, kann es zweckmäßig sein, wenn die voneinander abgewandten Außenwangen der U-Schenkel 42 des Adapters 40 mit mehreren erhabenen Gleitrippen - nicht gezeichnet - versehen sind, welche die Abstützung zwischen den Seitenwänden 54 des Kupplungsstücks 18 und den U-Schenkeln 42 des Adapters 40 übernehmen. Zum Lösen des Wischblatts vom Wischerarm müssen die Rastnocken 68 soweit aufeinander zu ausgelenkt werden, dass die Rastschultern 70 und Sicherungsschultern 72 außer Eingriff mit den Gegenrastschultern 76 und den Gegensicherungsschultern 78 gelangen. Zur leichteren Bedienbarkeit sind die Rastnocken 68 mit jeweils einer Handhabe 80 (Figur 4) - in den Figuren 2 und 3 der besseren Übersicht wegen weggeschnitten - versehen, die sich quer zur Längserstreckung beziehungsweise in Bewegungsrichtung (Doppelpfeile 67) der Verlängerungen 66 erstrecken (Figur 4). Die an den Verlängerungen 66 vorhandenen Rastnocken 66 bilden also mit ihren Rastschultern 70 und Sicherungsschultern 72 wischblattseitige Sicherungsmittel, die gegen eine Rückstellkraft quer zur Längserstreckung des Tragelements 22 in einer zu dessen Bandbreite parallelen Ebene auslenkbar sind und die mit am Kupplungsstück 18 ausgebildeten Gegenrastmitteln 74, 76, 78 zusammenwirken. Wenn das Wischblatt 14 in der oben beschrieben Weise mit dem Wischerarm 12 verbunden und gegen unbeabsichtigtes Lösen durch die Sicherungsmittel gesichert ist, kann es - in Folge der Gelenkverbindung zwischen dem Adapter 40 und dem Kupplungselement 20 um die Längsachse der Gelenkzapfen 38 in Richtung des Doppelpfeils 39 (Figur 1) schwingen.

Wie Figur 1 weiter zeigt, ist die zu wischenden Oberfläche der Scheibe beispielsweise die Oberfläche 17 der Windschutzscheibe 15 eines Kraftfahrzeuges gekrümmt. Da die in Figur 1 gezeigte Krümmung der Scheibenoberfläche 17 die stärkste Krümmung der zumeist sphärisch gekrümmten Scheibenoberfläche darstellen soll ist klar ersichtlich, dass die Krümmung des mit seinen beiden Enden 14` an der Scheibenoberfläche anliegenden, noch unbelasteten Wischblatts 14 stärker ist als die maximale Scheibenkrümmung. Unter einer über den Wischerarm 12 ausgeübten in Richtung des Pfeiles 11 (Figur 1) wirkenden Anlegekraft legt sich das Wischblatt mit seiner an der konkav gekrümmten Bandfläche 21 des Tragelements 22 angeordneten gummielastischen Wischleiste 30 über seine gesamte Länge an der Scheibenoberfläche 17 an. Dabei baut sich im aus Metall gefertigten, federelastischen Tragelement 22 eine Spannung auf, welche für eine ordnungsgemäße Anlage der Wischleiste über deren gesamte Länge an der Scheibe sowie für eine gleichmäßige Verteilung des von der Anlegekraft bewirkten Anpressdrucks (Pfeil 11) sorgt. Weiter sorgt das Tragelement mit seinen Federschienen 24 für die notwendige Querstabilisierung der gummielastischen Wischleiste 30. Weil die in aller Regel sphärisch gekrümmte Scheibe nicht einen Abschnitt einer Kugeloberfläche darstellt, muss sich das Wischblatt gegenüber dem Wischerarm während seiner Wischbewegung ständig der jeweiligen Lage und dem Verlauf der Scheibenoberfläche anpassen können. Deshalb ist die eine Schwingbewegung (Doppelpfeil 39 in Figur 1) um die Gelenkzapfenachse ermöglichende leichtgängige Gelenkverbindung zwischen dem Wischerarm und dem Wischblatt notwendig.

Damit diese Gelenkverbindung gegen Umwelteinflüsse wie zum Beispiel Straßenschmutz, Schnee, Eis etc. geschützt ist und darüber hinaus der Wischhebel auch im Übergangsbereich zwischen Wischerarm und Wischblatt eine gefällige, ansprechende optische Gestaltung aufweist, ist diese Gelenkverbindung von einer am Wischblatt gehaltenen Kappe abgedeckt, die einen als Öffnung ausgebildeten Durchtritt aufweist, durch welchen der Wischerarm 12 zur Bildung des Wischhebels mit seinem Kupplungsstück 18 hindurch greift.

Um eine einfache Montage des Wischhebels zu gewährleisten und damit auch dem Laien einen unkomplizierten Wechsel des Wischblatts zu ermöglichen, muss die Abdeckkappe unter Berücksichtigung der Gestaltung und Anordnung der Sicherungsmittel sowie der Ausführung der dazugehörigen Handhaben entsprechend ausgestaltet sein. Im Folgenden werden drei verschiedene Ausführungen von derartigen Abdeckkappen anhand der Figuren 5 bis 7, 8 bis 11 und 12 bis 14 beschrieben.

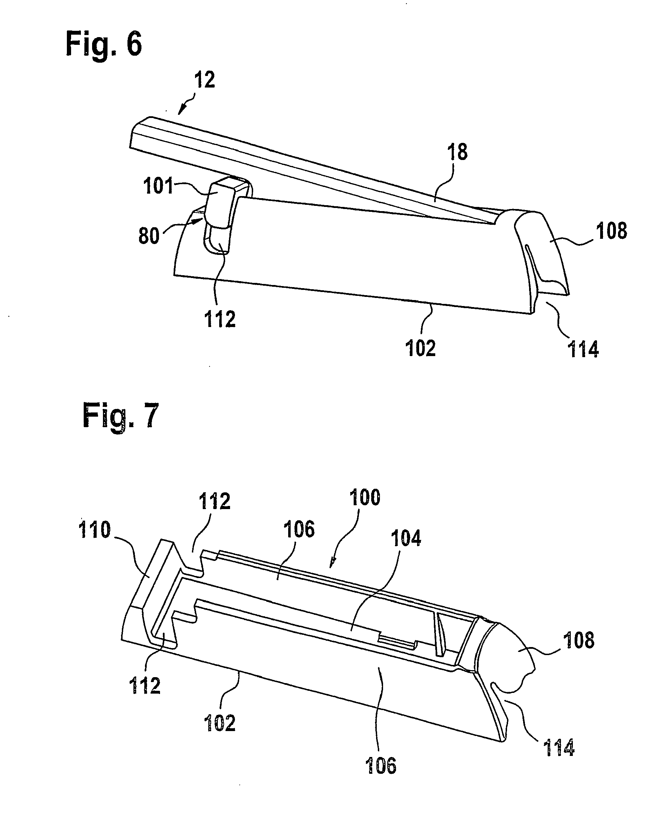

Bei der Ausführungsform gemäß den Figuren 5 bis 7 weisen die Sicherungsmittel zwei Handhaben 80 auf, die quer zur Längserstreckung des Wischerarms 12 gesehen einander gegenüberliegen. Zur Anordnung und Ausbildung der Handhaben sowie zur Anordnung der Abdeckkappe am Wischblatt ist auch die Figur 4 zu betrachten. Die Abdeckkappe 100 hat eine im wesentlichen trogartige Gestalt (Figur 7). Der Trogrand 102 der Abdeckkappe ist bei montierter Kappe dem Tragelement 22 des Wischblatts 14 zugewandt und beim Ausführungsbeispiel mit diesem verrastet. Aus Figur 7 ist ersichtlich, dass der Trogboden der Abdeckkappe 100 fast völlig entfernt worden ist, so dass sich ein Durchtritt beziehungsweise eine Durchgreiföffnung 104 für das Kupplungsstück 18 des Wischerarms 12 ergibt. Die Abdeckkappe 100 hat somit im wesentlichen zwei zueinander parallele Längswände 106, welche an ihren Enden durch eine Querwand 108 und eine Querstrebe 110 miteinander verbunden sind. Nahe der Querstrebe 110 sind die beiden Längswände 106 mit Ausnehmungen oder Ausformungen 112 versehen, in welche die Handhaben 80 der Sicherungsmittel ragen, wenn die Abdeckkappe 100 am Wischblatt montiert ist. Diese Situation ist aus den Figuren 4 bis 6 und 7 ersichtlich. Da die Ausformungen 112 von der Durchgreiföffnung 104 aus gesehen randoffen sind, wird die schon erwähnte Schwingbewegung (Doppelpfeil 39 in Figur 1) des Wischblatts 14 nicht eingeschränkt. Diese Relativbewegung zwischen Wischerarm 12 und Wischblatt 14 wird mit den Figuren 5 und 6 belegt, in denen jeweils eine der beiden Endpositionen der Schwingbewegung (Doppelpfeil 39) dargestellt ist (Figur 1). Die Figuren 4 bis 7 zeigen, dass der Adapter mit zwei einander gegenüberliegenden zur Abdeckkappe vorspringenden Handhaben 80 ausgestattet ist und dass jede der den Handhaben benachbarten Längs- oder Trogwände 106 der Abdeckkappe 100 mit einer der betreffenden Handhabe zugeordneten Ausnehmung 112 versehen ist, in welche die jeweilige Handhabe ragt. Beide Handhaben 80 sind zur Bedienung leicht zugänglich und auf einfache Weise durch gleichzeitiges Zusammendrücken betätigbar. Sie schließen mit ihren Endflächen 101 mit den äußeren Trogwandflächen ab, so dass sich optisch keine störenden Aussparungen ergeben (Figur 5). Aussparungen 114 in der Querwand 108 und in der Querstrebe 110 ermöglichen die Durchführung der Spoiler-Teilstücke 23 unter die Abdeckkappe 100.

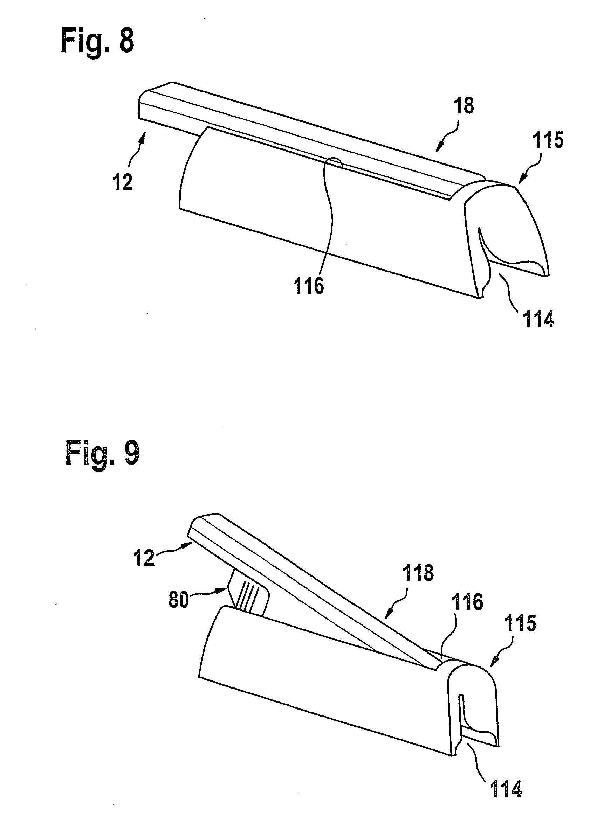

Bei der Ausführungsform gemäß den Figuren 8 bis 10 sind die Handhaben 80 der Sicherungsmittel so dimensioniert, dass sie sich seitlich nicht oder nur unwesentlich über das Kupplungsstück 18 des Wischerarms 12 hinaus erstrecken. Sie tauchen also durch die Durchgreiföffnung 116 vollständig in die Abdeckkappe 115 ein, wenn sich diese in der in Figur 8 gezeigten einen Endstellung der Wischblatt-Schwingbewegung (Doppelpfeil 39in Figur 1) befindet. In der anderen Endstellung (Figur 9) sind die Handhaben 80 zwar zugänglich, doch wird diese Position während des Wischbetriebs nur temporär erreicht, so dass ein nicht beabsichtigtes Betätigen der Handhaben 80 ausgeschlossen ist. Das Wischblatt kann also nur dann vom Wischerarm gelöst werden, wenn die gesamte Wischvorrichtung stillgesetzt , der Wischerarm von der Scheibe weggeklappt und das Wischblatt gegenüber dem Wischerarm von Hand in die in Figur 9 gezeigte Position geschwenkt worden ist. Eine Betätigung der Handhaben 80, deren Positionierung den Handhaben 80 gemäß den Figuren 4 bis 6 entspricht, ist dann unter Beachtung dieser Maßgabe ohne besonderen Aufwand möglich.

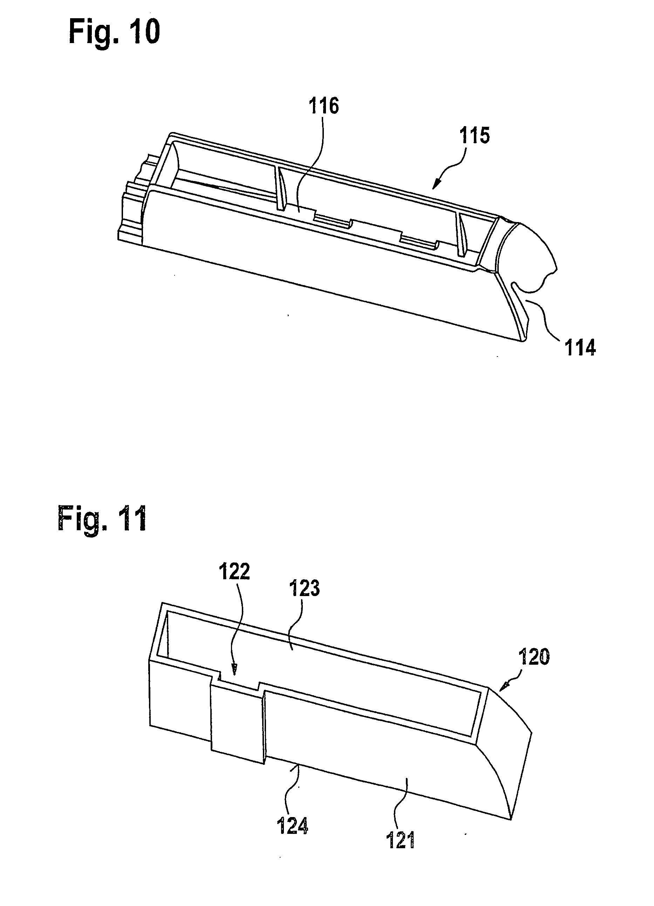

Wenn jedoch aus bestimmten Gründen eine rundum geschlossene, die Handhaben 80 vollständig abdeckende Abdeckkappe 120 - wie in den Figuren 8 bis 10 dargelegt bei einem Wischhebel verwendet werden soll, dessen Handhaben aber aus bestimmten Gründen - zum Beispiel wegen einer leichteren Bedienbarkeit - bis in die Kontur der Abdeckkappe 130 ragen müssen, hat es sich als vorteilhaft erwiesen, wenn die der Handhabe benachbarte Trogwand 121 der Abdeckkappe 120 an ihrer Innenseite mit einer nutartigen Vertiefung 122 versehen ist, die sich von der Durchgreiföffnung 123 zum Trogrand 121erstreckt, so dass die Handhabe in diese Vertiefung ragen kann (Figur 11).

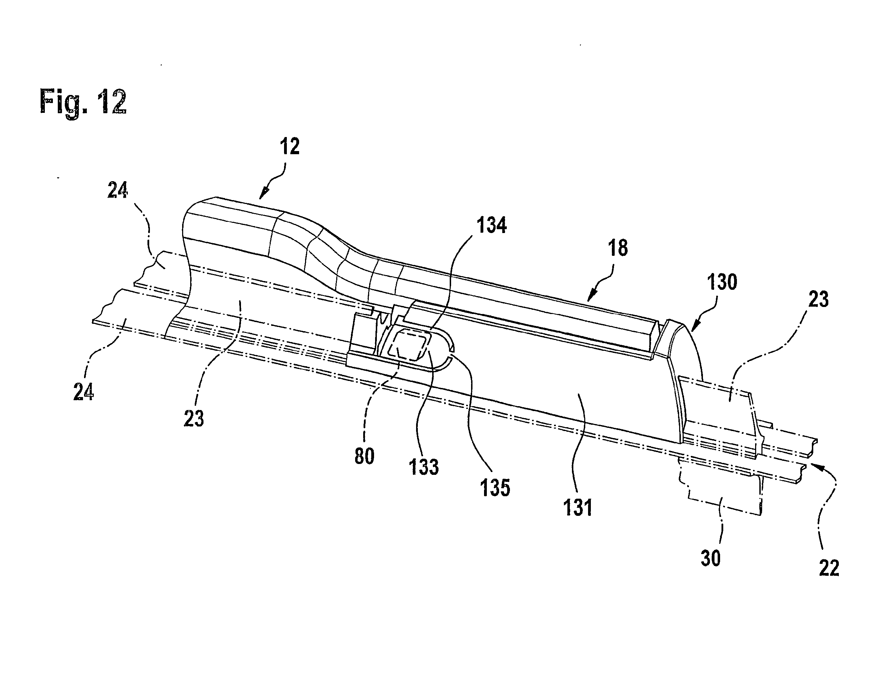

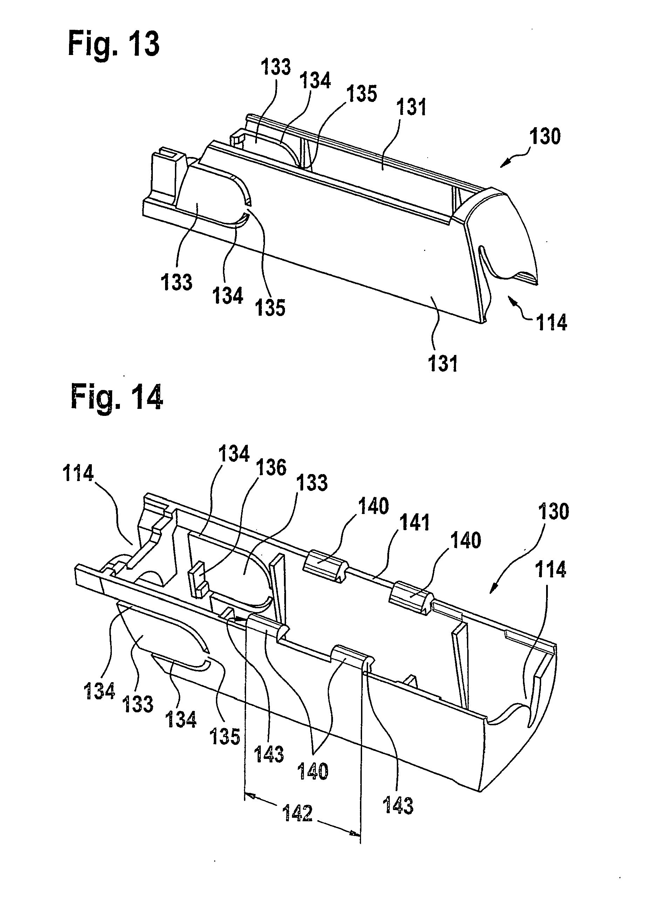

Bei der Anordnung nach den Figuren 12 bis 14 entsprechen die Gestaltungen der Sicherungsmittel und deren Handhaben im wesentlichen der Ausführungsform gemäß den Figuren 8 bis 10. Die Längswände 131 der Abdeckkappe 130 sind deshalb nicht mit Durchtrittsaussparungen für die Handhaben 80 versehen, weil sie nicht oder nur unwesentlich seitlich aus dem Kupplungsstück 18 des Wischerarms 12 ragen. Bei dieser Ausführungsform der Erfindung ist zur Bedienung der vollständig von den beiden Seiten überdeckten Handhaben 80 jede der beiden Trog-Längswände 131 mit einem elastisch nachgiebigen Bereich 133 ausgestattet. Diese beiden Bereiche 133 sind den Handhaben 80 zugeordnet, das heißt, sie liegen direkt den Handhaben 80 gegenüber (Figur 12). Da die Abdeckkappen 130 aus einem elastischen Kunststoff gefertigt sind, kann der nachgiebige, den Handhaben 80 zugeordneten Bereich 133 auf vielfache Weise erreicht werden. Beim Ausführungsbeispiel sind in den Trogwänden 131 diese Bereiche 133 teilweise umfassende schlitzartige Durchbrüche 134 angeordnet, die so ausgebildet sind, dass der Bereich praktisch durch eine Zunge gebildet ist, welche über einen Steg 135 mit der verbleibenden Trogwand 131 elastisch verbunden ist. Um einen möglichen Abstand zwischen der Innenseite dieser Zungen 133 und den diesen zugewandten Oberflächen der Handhaben zu überbrücken und dadurch eine bestimmte Leerbewegung der Zungen zu vermeiden, sind die nachgiebigen Bereiche 133, das heißt die Zungen an ihren Innenseiten mit je einer sich zur Handhabe 80 erstreckenden Abstützung 136 versehen (Figur 14).

Figur 14 zeigt auch die Anordnung von vier Rastkrallen 140 am Trogrand 141 der Abdeckkappe 130, die einander paarweise gegenüberliegen. Der Abstand 142 zwischen den voneinander wegweisenden Stirnseiten 143 der an derselben Trogwand angeordneten Haltekrallen 140 ist so auf das Maß 34 zwischen den Krallen 36 des Kupplungselements 20 abgestimmt (Figur 3), dass die Rastkrallen 140 der Abdeckkappe 130 im Zusammenwirken mit den Krallen 36 des Kupplungselements 20 Positionierungshilfen bilden, welche die Montage der Abdeckkappe 130 am Wischblatt 14 beziehungsweise am Tragelement 22 vereinfacht. Die Haltekrallen 36 des Kupplungselements 20 beziehungsweise deren voneinander abgewandten Stirnflächen bilden somit am Tragelement22 festgelegte Anschläge, die im Zusammenwirken mit den Gegenanschläge bildenden Rastkrallen 140 der Abdeckkappe 130 die Montageposition der Abdeckkappe am Tragelement bestimmen. Durch eine entsprechende Abstimmung des Abstandmaßes von den Krallen 36 zu den Handhaben 80 der Sicherungsmittel - diese Maß liegt fest durch die Lagerung des Adapters 40 an den Gelenkzapfen 38 - ist auch das Maß von den Rastkrallen 140 der Abdeckkappe 130 zum elastisch nachgiebigen Bereich 133 beziehungsweise zu den Zungen und damit die Montageposition der Abdeckkappe 130 am Wischblatt eindeutig bestimmt.

Wie die Figuren 1 und 12 zeigen, ist das Wischblatt 14 an der konvex gekrümmten Seite 28 des Tragelements 22 mit einer Windabweisleiste 23 - auch Spoiler genannt - versehen, der jedoch dort eine Längsaussparung aufweisen muss, wo das Kupplungselement 20 mit dem Tragelement 22 verbunden ist. Deshalb ist die Querwand 108 mit einem an die Kontur der Windabweisleiste angepassten Ausnehmung 114 versehen, durch welche der Spoiler bis unter die Kappe geführt werden kann. Auch die Querstrebe 110 weist eine solche Ausnehmung für den Spoiler 23 auf, so dass ein unharmonischer Übergang zwischen Spoiler und Abdeckkappe vermieden werden kann.

Anhand der Schilderung der verschiedenen Ausführungsbeispiele ist klar ersichtlich, dass die Verbindungseinrichtung über wenigstens mit einer Handhabe betätigbare Mittel zum Sichern der Verbindung zwischen Wischerarm und Wischblatt verfügt und dass die Kappe die Handhabe so aufnimmt, dass diese optisch nicht störend in Erscheinung tritt, trotzdem aber gegen unbeabsichtigte Betätigung geschützt leicht zugänglich ist. Das "Aufnehmen" der Handhabe durch die Abdeckkappe ist so zu verstehen, dass diese nicht über die Konturen der Kappe hinausragen. Um die Sicherungsmittel mit der Handhabe zu betätigen, ist also ein zielgerichtetes Handeln erforderlich.

## Patentansprüche

1. Wischblatt zum Reinigen von Scheiben insbesondere von Kraftfahrzeugen mit einem bandartig langgestreckten, federelastischen, über seine Bandflächen (26, 28) in Längsrichtung gekrümmten Tragelement (22), an dessen konkav gekrümmter Bandfläche (26) sich eine gummielastische Wischleiste (30) befindet und an dessen konvex gekrümmter Bandfläche (28) ein Kupplungselement (20) zum gelenkigen Verbinden des Wischblatts (14) mit einem angetriebenen Wischerarm (12) angeordnet ist, wobei das Kupplungselement (20) mit einem Adapter (40) versehen ist, und wobei das Kupplungselement (20) und dessen Adapter (40) von einer einen Durchtritt (104) für den Wischerarm (12) aufweisenden Kappe (100) abgedeckt ist, **dadurch gekennzeichnet, dass** der Adapter Mittel zum Sichern des Wischblatts am Wischerarm aufweist, welche aus einer und die Verriegelungsstellung in eine Entriegelungsstellung bewegbar sind und die Ausbildung der Kappe die Betätigung der Sicherungsmittel zulässt.

2. Wischhebel (10) mit einem angetriebenen Wischerarm (12) und einem an diesem angelenkten Wischblatt (14) nach Anspruch 1, **dadurch gekennzeichnet, dass** die Gelenkverbindung zwischen Wischerarm (12) und Wischblatt (10) über mit wenigstens einer Handhabe (80) betätigbare Mittel zum Sichern der Verbindung zwischen Wischerarm (12) und Wischblatt (14) verfügt und dass die Kappe (100) die Handhabe (80) aufnimmt.

3. Wischhebel nach Anspruch 2, **dadurch gekennzeichnet, dass** an dem Kupplungselement (20) des Wischblatts ein zur Gelenkverbindung zwischen Wischerarm (12) und Wischblatt (10) gehörender, mit dem Kupplungsstück (18) des Wischerarms verbindbarer Adapter (40) angelenkt ist, an dem die Handhabe (80) für die Sicherungsmittel angeordnet ist und dass die Ausgestaltung der Abdeckkappe (100) die Betätigung der Sicherungsmittel zulässt.

4. Wischhebel nach Anspruch 3, **dadurch gekennzeichnet, dass** der aus einem elastischen Kunststoff bestehende Adapter (40) gegen eine Rückstellkraft quer zur Längserstreckung des Tragelements (22) in einer zu dessen Bandbreite zumindest nahezu parallelen Ebene auslenkbare, über die Handhabe (80) betätigbare Sicherungsmittel bildende Rastmittel verfügt, die mit am Kupplungsstück (18) des Wischerarms ausgebildeten Gegenrastmitteln zusammenwirken.

5. Wischhebel nach einem der Ansprüche 3 oder 4, **dadurch gekennzeichnet, dass** die Abdeckkappe (100) trogartig ausgebildet mit ihrem Trogrand (102) dem Tragelement (22) zugewandt ist, dass die Abdeckkappe mit einer Durchgreiföffnung (104) für den Wischerarm versehen ist und dass der Adapter (40) mit der zur Troglängswand (106) der Abdeckkappe vorspringenden Handhabe (80) ausgestattet ist.

6. Wischhebel nach Anspruch 5, **dadurch gekennzeichnet, dass** die der Handhabe (80) benachbarte Trogwand (106) der Abdeckkappe (100) mit einer dieser zugeordneten Ausnehmung (112) versehen ist.

7. Wischhebel nach Anspruch 6, **dadurch gekennzeichnet, dass** die Handhabe (80) in diese Ausnehmung (112) ragt.

8. Wischhebel nach Anspruch 5, **dadurch gekennzeichnet, dass** die der Handhabe benachbarte Trogwand (121) der Abdeckkappe (120) an ihrer Innenseite mit einer nutartigen Vertiefung (122) versehen ist, die sich von dem Durchtritt (123) zum Trogrand (124) erstreckt und dass die Handhabe (80) in diese Vertiefung (122) ragt.

9. Wischhebel nach Anspruch 5, **dadurch gekennzeichnet, dass** die der Handhabe (80) benachbarte Trogwand (131) der aus einem elastischen Kunststoff gefertigten Abdeckkappe (130) einen der Handhabe zugeordneten elastisch nachgiebigen Bereich (133) aufweist.

10. Wischhebel nach Anspruch 9, **dadurch gekennzeichnet, dass** der elastisch nachgiebige Bereich (133) durch zumindest einen schlitzartigen, diesen Bereich teilweise umfassenden Durchbruch (134) in der Trogwand (131) gebildet ist.

11. Wischhebel nach einem der Ansprüche 9 oder 10, **dadurch gekennzeichnet, dass** der elastisch nachgiebige Bereich (133) der Trogwand (131) an seiner Innenseite mit einer sich zur Handhabe (80) erstreckenden Abstützung (136) versehen ist.

12. Wischhebel nach einem der Ansprüche 4 bis 11, **dadurch gekennzeichnet, dass** die Sicherungsmittel zwei in ihrer Auslenkrichtung mit Abstand von einander angeordnete Handhaben (80) aufweisen, wobei in der einander angenäherten Auslenkposition der Handhaben (80) die Sicherung der Verbindung zwischen Wischerarm (12) und Wischblatt (14) gelöst ist.

13. Wischhebel nach einem der Ansprüche 2 bis 12, **dadurch gekennzeichnet, dass** die Abdeckkappe (130) mit dem Tragelement (22) des Wischblatts (14) verrastet ist.

14. Wischhebel nach einem der Ansprüche 2 bis 13, **dadurch gekennzeichnet, dass** das Tragelement (22) mit wenigstens zwei jeweils in einander entgegengesetzten Längsrichtungen weisenden Anschlägen (36) versehen ist, denen entsprechende Gegenanschläge (143) der Abdeckkappe (130) zugeordnet sind.

## Claims

1. Wiper blade for cleaning windows, especially windows pertaining to motor vehicles, with a rubber-elastic supporting element (22) which is elongated in the manner of a band, is curved in the longitudinal direction over its band surfaces (26, 28) and on the concavely curved band surface (26) of which there is a rubber-elastic wiper strip (30), and on the convexly curved band surface (28) of which a coupling element (20) for connecting the wiper blade (14) to a driven wiper arm (12) in an articulated manner is arranged, wherein the coupling element (20) is provided with an adapter (40), and wherein the coupling element (20) and its adapter (40) are covered by a cap (100) which has a passage (104) for the wiper arm (12), **characterized in that** the adapter has means for securing the wiper blade to the wiper arm, which means are moveable from a locking position into a release position, and the design of the cap permits the actuation of the securing means.

2. Wiper lever (10) comprising a driven wiper arm (12) and a wiper blade (14) which is connected to the same in an articulated manner, according to Claim 1, **characterized in that** the articulated connection between wiper arm (12) and wiper blade (10) has means, which can be actuated by at least one handle (80), for securing the connection between wiper arm (12) and wiper blade (14), and **in that** the cap (100) accommodates the handle (80).

3. Wiper lever according to Claim 2, **characterized in that** an adapter (40) is connected to the coupling element (20) of the wiper blade in an articulated manner, which adapter (40) belongs to the articulated connection between wiper arm (12) and wiper blade (10), can be connected to the coupling piece (18) of the wiper arm and on which the handle (80) for the securing means is arranged, and **in that** the configuration of the covering cap (100) permits the actuation of the securing means.

4. Wiper lever according to Claim 3, **characterized in that** the adapter (40), which is composed of a flexible plastic, has latching means which can be deflected counter to a resetting force transversely with respect to the longitudinal extent of the supporting element (22) in a plane at least approximately parallel to the band width of said supporting element, form securing means which can be actuated via the handle (80) and interact with mating latching means formed on the coupling piece (18) of the wiper arm.

5. Wiper lever according to either of Claims 3 and 4, **characterized in that** the covering cap (100) is of trough-like design with its trough edge (102) facing the supporting element (22), **in that** the covering cap is provided with a penetration opening (104) for the wiper arm, and **in that** the adapter (40) is equipped with the handle (80) projecting towards the longitudinal trough wall (106) of the covering cap.

6. Wiper lever according to Claim 5, **characterized in that that** trough wall (106) of the covering cap (100) which is adjacent to the handle (80) is provided with a recess (112) assigned to said handle.

7. Wiper lever according to Claim 6, **characterized in that** the handle (80) protrudes into this recess (112).

8. Wiper lever according to Claim 5, **characterized in that** the inside of that trough wall (121) of the covering cap (120) which is adjacent to the handle is provided with a groove-like depression (122) which extends from the passage (123) to the trough edge (124), and **in that** the handle (80) protrudes into said depression (122).

9. Wiper lever according to Claim 5, **characterized in that that** trough wall (131) of the covering cap (130) which is adjacent to the handle (80), said covering cap being manufactured from a flexible plastic, has an elastically flexible region (133) which is assigned to the handle.

10. Wiper lever according to Claim 9, **characterized in that** the elastically flexible region (133) is formed in the trough wall (131) by at least one slot-like aperture (134) which partially surrounds said region.

11. Wiper lever according to either of Claims 9 and 10, **characterized in that** the inside of the elastically flexible region (133) of the trough wall (131) is provided with a support (136) which extends to the handle (80).

12. Wiper lever according to one of Claims 4 to 11, **characterized in that** the securing means have two handles (80) which are arranged at a distance from each other in their deflection direction, with the securing of the connection between wiper arm (12) and wiper blade (14) being released in the deflection position of the handles (80) in which they are brought close to each other.

13. Wiper lever according to one of Claims 2 to 12, **characterized in that** the covering cap (130) is latched to the supporting element (22) of the wiper blade (14).

14. Wiper lever according to one of Claims 2 to 13, **characterized in that** the supporting element (22) is provided with at least two stops (36) which each point in mutually opposite longitudinal directions and to which corresponding mating stops (143) of the covering cap (130) are assigned.

## Revendications

1. Balai d'essuie-glace pour nettoyer des vitres notamment de véhicules automobiles, comportant un élément de support (22), en forme de ruban, allongé, élastique comme un ressort et cintré dans la direction longitudinale sur ses surfaces de bandes (26, 28) et dont la surface de bande (26) à cintrage concave comporte une lame d'essuyage (30) élastique comme du caoutchouc et la surface de bande (28) à cintrage convexe comporte un élément de couplage (20) pour relier de manière articulée, le balai d'essuie-glace (14) au bras d'essuie-glace (12) entraîné, l'élément de couplage (20) étant muni d'un adaptateur (40) et l'élément de couplage (20) et son adaptateur (40) sont couverts par un capot (100) ayant un passage (104) pour le bras d'essuie-glace (12),
**caractérisé en ce que**
l'adaptateur (40) comporte des moyens pour fixer le balai d'essuie-glace (14) au bras d'essuie-glace (12), ces moyens pouvant être déplacés d'une position de verrouillage dans une position de déverrouillage et la réalisation du capot (100) autorise l'actionnement des moyens de fixation.

2. Levier d'essuie-glace (10) comportant un bras d'essuie-glace (12) entraîné et un balai d'essuie-glace (14) articulé sur celui-ci selon la revendication 1,
**caractérisé en ce que**
la liaison articulée entre le bras d'essuie-glace (12) et le balai d'essuie-glace (10) comporte des moyens actionnés à l'aide d'au moins une poignée (80) pour fixer la liaison entre le bras d'essuie-glace (12) et le balai d'essuie-glace (14), le capot (100) reçevant la poignée (80).

3. Levier d'essuie-glace selon la revendication 2,
**caractérisé en ce que**
l'élément de couplage (20) du balai d'essuie-glace comporte un adaptateur (40) relié à la pièce de couplage (18) du bras d'essuie-glace par une liaison articulée entre le bras d'essuie-glace (12) et le balai d'essuie-glace (10), l'adaptateur faisant partie de la liaison articulée, et il porte la poignée (80) du moyen de fixation et la réalisation du capot (100) permet l'actionnement du moyen de fixation.

4. Levier d'essuie-glace selon la revendication 3,
**caractérisé en ce que**
l'adaptateur (40), réalisé en une matière plastique élastique, peut être ouvert contre une force de rappel, transversalement à l'extension longitudinale de l'élément de support (22), dans un plan au moins pratiquement parallèle à sa largeur de bande, et il comporte des moyens d'enclipsage formant des moyens de fixation actionnés par l'intermédiaire de la poignée (80), ces moyens coopérant avec des moyens d'enclipsage complémentaires réalisés sur la pièce de couplage (18) du bras d'essuie-glace.

5. Levier d'essuie-glace selon l'une des revendications 3 ou 4,
**caractérisé en ce que**
le capot (100) est en forme de goulotte et son bord (102) est tourné vers l'élément de support (22), le capot comportant un orifice de passage (104) pour le bras d'essuie-glace et l'adaptateur (40) est équipé d'une poignée (80) qui vient en saillie par rapport à la paroi longitudinale (106) du capot en forme de goulotte.

6. Levier d'essuie-glace selon la revendication 5,
**caractérisé en ce que**
la paroi de goulotte (106) voisine de la poignée (80) du capot (100) est munie d'une découpe (112) correspondante.

7. Levier d'essuie-glace selon la revendication 6,
**caractérisé en ce que**
la poignée (80) pénètre dans la découpe (112).

8. Levier d'essuie-glace selon la revendication 5,
**caractérisé en ce que**
la paroi de goulotte (121) du capot (120) au voisinage de la poignée, comporte sur son côté intérieur une cavité (122) en forme de rainure qui s'étend du passage (123) jusqu'au bord (124) de la forme de goulotte et la poignée (80) pénètre dans cette cavité (122).

9. Levier d'essuie-glace selon la revendication 5,
**caractérisé en ce que**
la paroi de goulotte (131) du capot (100) voisine de la poignée (80) réalisée en matière plastique élastique, présente une zone (133) souple élastique associée à la poignée.

10. Levier d'essuie-glace selon la revendication 9,
**caractérisé en ce que**
la zone souple élastique (133) est formée par au moins un passage (134) en forme de fente entourant au moins partiellement cette zone souple dans la paroi en forme de goulotte (131).

11. Levier d'essuie-glace selon l'une des revendications 9 ou 10,
**caractérisé en ce que**
la zone (133) élastique souple de la paroi (131) en forme de goulotte est munie sur son côté intérieur d'un appui (136) arrivant jusqu'à la poignée (80).

12. Levier d'essuie-glace selon l'une des revendications 4 à 11,
**caractérisé en ce que**
les moyens de fixations ont deux poignées (80) avec des directions de débattement s'écartant l'une de l'autre et lorsque les poignées (80) sont dans l'une des positions de débattements approchées, elles libèrent la fixation de la liaison entre le bras d'essuie-glace (12) et le balai d'essuie-glace (14).

13. Levier d'essuie-glace selon l'une des revendications 2 à 12,
**caractérisé en ce que**
le capot (130) est accroché à l'élément de support (22) du balai d'essuie-glace (14).

14. Levier d'essuie-glace selon l'une des revendications 2 à 13,
**caractérisé en ce que**
l'élément de support (22) comporte au moins deux butées (36) dirigées dans des directions longitudinales opposées, et auxquelles sont associées des contre-butées (143) du capot (130).
